Europäisches Patentamt

**European Patent Office**

**Office européen des brevets**

(19)

(11) Publication number: **0 037 646**
**B1**

# EUROPEAN PATENT SPECIFICATION

(45) Date of publication of patent specification: **13.06.84**

(21) Application number: **81301071.7**

(22) Date of filing: **13.03.81**

(51) Int. Cl.³: **B 05 B 5/04, H 01 R 39/00, H 02 K 9/28, F 16 C 17/03, F 16 C 17/12**

(54) **A rotary type electrostatic spray painting device.**

(30) Priority: **04.04.80 JP 43454/80**
**23.05.80 JP 67912/80**
**26.05.80 JP 69007/80**

(43) Date of publication of application:
**14.10.81 Bulletin 81/41**

(45) Publication of the grant of the patent:
**13.06.84 Bulletin 84/24**

(84) Designated Contracting States:
**CH DE FR GB LI**

(56) References cited:
**BE - A - 654 767**
**DE - A - 2 308 936**
**DE - C - 240 518**
**DE - C - 490 375**
**DE - C - 973 478**
**FR - A - 2 336 181**
**FR - A - 2 426 354**
**GB - A - 292 232**
**GB - A - 1 072 684**
**US - A - 2 449 138**
**US - A - 3 985 405**

(73) Proprietor: **TOYOTA JIDOSHA KABUSHIKI KAISHA**
**1, Toyota-cho Toyota-shi**
**Aichi-ken 471 (JP)**

(72) Inventor: **Sugiyama, Matsuyoshi**
**1321, Mishukeu**
**Susono-shi Shizuoka-ken (JP)**
Inventor: **Morishita, Teru**
**187-1, Nagasawa**
**Shimizu-cho Sunto-gun Shizuoka-ken (JP)**
Inventor: **Suzuki, Toshikazu**
**1-1, Hirayama-cho, 3-chome**
**Toyota-shi, Aichi-ken (JP)**

(74) Representative: **Burnside, Michael et al,**
**c/o Michael Burnside & Partners 2 Serjeants' Inn**
**Fleet Street**
**London EC4Y 1HL (GB)**

Courier Press, Leamington Spa, England.

# Description

The present invention relates to a rotary type electrostatic spray painting device.

As an electrostatic spray painting device used for painting, for example, bodies of motor cars, a rotary type electrostatic spray painting device has been known, which comprises a rotary shaft supported by ball bearings or roller bearings within the housing of the painting device, and a cup shaped spray head fixed onto the front end of the rotary shaft. In this painting device, a negative high voltage is applied to the spray head, and paint is fed onto the inner circumferential wall of the spray head. Thus, fine paint particles charged with electrons are sprayed from the spray head and are attracted by the electrical force onto the surface of the body of a motor car, which is grounded. As a result of this, the surface of the body of a motor car is painted. In such a rotary type electrostatic spray painting device, since the paint, the amount of which is about 90 percent relative to the amount of the paint sprayed from the spray head, can be efficiently used for painting the surface to be painted, the consumption of the paint is small and, as a result, as rotary type electrostatic spray painting device is used in various industries.

In order to form a beautiful finished surface when the surface is painted by using a spray paint, it is necessary to reduce the size of the particles of paint as much as possible. In the case wherein the paint is divided into fine particles by using the centrifugal force caused by the rotation of the spray head, as in a rotary type spray painting device, the strength of the centrifugal force, that is, the rotating speed of the spray head has a great influence on the size of the particles of paint. In other words, the higher the rotating speed of the spray head becomes, the smaller the size of the particles of paint becomes. Consequently, in order to form a beautiful finished surface by using a rotary type electrostatic spray painting device, it is necessary to increase the rotating speed of the spray head as much as possible. As mentioned above, in a conventional rotary type electrostatic spray painting device, ball bearings or roller bearings are used for supporting the rotary shaft of the electrostatic spray painting device and, in addition, a lubricant, such as grease, is confined within the ball bearings or the roller bearings. However, when such bearings, which are lubricated by grease are rotated at a high speed, the bearings instantaneously deteriorate. Therefore, in a conventional rotary type electrostatic spray painting device adopting the bearings which are lubricated by grease, the maximum rotating speed of the rotary shaft, that is, the maximum rotating speed of the spray head, is at most 20,000 r.p.m. However, in the case wherein the rotating speed of the spray head is about 20,000 r.p.m., the size of the particles of paint is relatively large and, thus, it is difficult to form a beautiful finished surface by using such a conventional rotary type electrostatic spray painting device. In the field of manufacturing motor cars, the painting process for bodies of motor cars comprises a primary spraying step, an undercoating step, and a finish painting step. However, since it is difficult to form a beautiful finished surface by using a conventional rotary type electrostatic spray painting device as mentioned above, such a conventional rotary type electrostatic spray painting device is used for carrying out the undercoating step, but cannot be used for carrying out the finish painting step.

As a method of lubricating bearings, a jet lubricating system has been known, in which, by injecting the lubricating oil of a low viscosity into the region between the inner race and the outer race of the ball or roller bearing, the friction between the ball or roller and such races is greatly reduced and, at the same time, the heat caused by the friction is absorbed by the lubricating oil. In the case wherein the above-mentioned jet lubricating system is applied to a rotary type electrostatic spray painting device, it is possible to increase the rotating speed of the rotary shaft of the electrostatic spray painting device as compared with the case wherein grease lubricating bearings are used. However, since the jet lubricating system requires a complicated lubricating oil feed device having a large size, it is particularly difficult to apply such a jet lubricating system to a rotary type electrostatic spray painting device. In addition, if the lubricating oil is mixed with the paint, the external appearance of the painted surface is damaged. Therefore, if the jet lubricating system is applied to a rotary type electrostatic spray painting device, it is necessary to completely prevent the lubricating oil from leaking into the paint. However, it is practically impossible to completely prevent the lubricating oil from leaking into the paint and, thus, it is inadvisable to apply the jet lubricating system to a rotary type electrostatic spray painting device.

In addition, as a painting device capable of reducing the size of the particles of paint to a great extent, an air injection type electrostatic spray painting device has been known, in which the paint is divided into fine particles by the stream of injection air. In this air injection type electrostatic spray painting device, since the size of the particles of sprayed paint can be reduced to a great extent, as mentioned above, it is possible to form a beautiful finished surface. Consequently, in the field of manufacturing motor cars, the air injection type electrostatic spray painting device is adopted for carrying out the finish painting step for the bodies of motor cars. However, in such an air injection type electrostatic spray painting device, since the sprayed paint impinges upon the surface to be painted together with the stream of the injection air and, then, a large amount of the sprayed paint escapes, together with the stream of the injection air, without adhering onto the surface to be painted, the amount of the paint used to effectively paint the surface to be painted is about 40 percent of the amount of the paint sprayed from the electrostatic spray painting device. Consequently, in the case wherein an air injection type electrostatic spray painting device is adopted, there is a problem in that the consumption of the paint is inevitably increased. In addition, in this case, a problem occurs in that the paint escaping, together with the stream of the injection air, causes air pollution within factories. The features in the precharacterizing part of claim 1 are disclosed in FR—A—2236181.

European Patent Applications No. 81100317.7 (0034254); 81100100.7 (0034246) and 81100629.5 (0034280), each of which comprises prior art within the meaning of Article 54(3) EPC, has a priority date 19th February, 1980 and was published on 26th August, 1981 and each of which is in the name of the same Applicant as that of the present Application, describe rotary type electrostatic spray painting devices.

An object of the present invention is to provide a rotary type electrostatic spray painting device capable of reducing the size of the particles of paint to be sprayed and reducing the quantity of paint used.

According to the present invention, there is provided a rotary type electrostatic spray painting device comprising: a metallic housing; a metallic rotary shaft rotatably arranged in said housing and having a front end and a rear end; a cup shaped metallic spray head fixed onto the front end of said rotary shaft and having a cup shaped inner wall; feeding means for feeding a paint onto said cup shaped inner wall; drive means cooperating with said rotary shaft for rotating said rotary shaft; a generator generating a negative high voltage and having an output connected to said housing; and, electrode means arranged in said housing, which applies said negative high voltage to said electrode means, and having an electrode arranged to continuously contact the rear end of said rotary shaft; characterized by non-contact type radial bearing means arranged in said housing and cooperating with said rotary shaft for radially supporting said rotary shaft under a non-contacting state; non-contact type thrust bearing means arranged in said housing and cooperating with said rotary shaft for axially supporting said rotary shaft under a non-contacting state; said electrode means having an electrical wire which is connected directly to said electrode and interconnects said electrode to said housing or to said output connected to said housing for assisting the supply of said negative high voltage to said spray head.

The present invention may be more fully understood from the description of preferred embodiments of the invention set forth below, together with the accompanying drawings.

In the drawings:

Fig. 1 is a cross-sectional side view of an embodiment of a rotary type electrostatic spray paint device according to the present invention;

Fig. 2 is a cross-sectional view taken along the line II—II in Fig. 1;

Fig. 3 is a cross-sectional view taken along the line III—III in Fig. 1;

Fig. 4 is a cross-sectional view taken along the line IV—IV in Fig. 1;

Fig. 5 is an enlarged cross-sectional side view of a portion of the device illustrated in Fig. 1;

Fig. 6 is a cross-sectional view taken along the line VI—VI in Fig. 5;

Fig. 7 is an enlarged cross-sectional side view of a portion of another embodiment of an electrostatic spray painting device according to the present invention;

Fig. 8 is a graph showing the relationship between the size of paint particles and the rotating speed of the spray head;

Fig. 9 is an enlarged cross-sectional side view of a portion of a further embodiment of an electrostatic spray painting device according to the present invention;

Fig. 10 is a cross-sectional view taken along the line X—X in Fig. 9;

Fig. 11 is an enlarged cross-sectional side view of a portion of a still further embodiment of an electrostatic spray painting device according to the present invention;

Fig. 12 is a side view taken along the line XII—XII in Fig. 11;

Fig. 13 is an enlarged cross-sectional side view of a portion of a still further embodiment of an electrostatic spray painting device according to the present invention, and;

Fig. 14 is a cross-sectional view taken along the line XIV—XIV in Fig. 13.

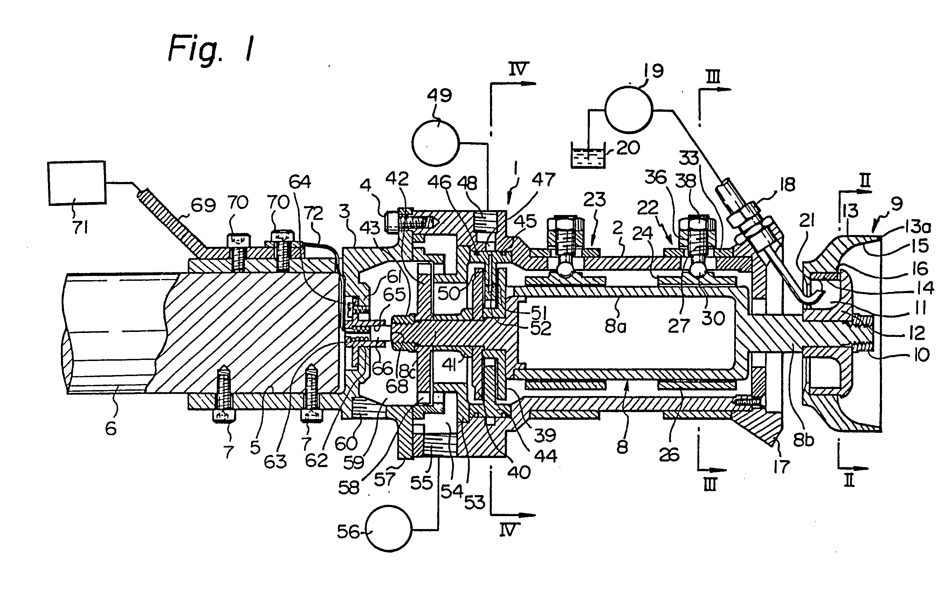

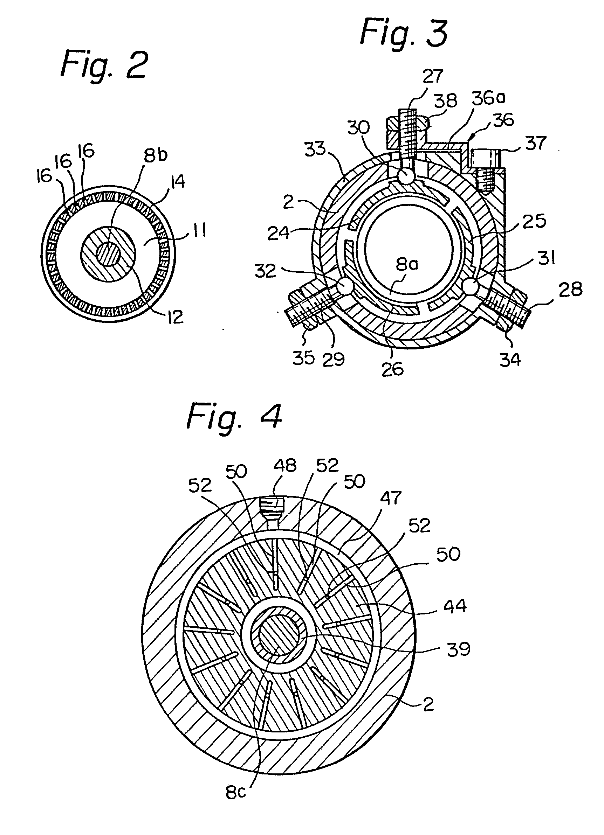

Referring to Fig. 1, a rotary type electrostatic spray painting device, generally designated by reference numeral 1, comprises a generally hollow cylindrical front housing 2 made of metallic material, and a generally hollow cylindrical rear housing 3 made of metallic material. The front housing 2 and the rear housing 3 are firmly joined to each other by bolts 4. A support rod 6, made of electrical insulating material, is fitted into a cylindrical hole 5 formed in the rear housing 3, and this rear housing 3 is fixed onto the support rod 6 by bolts 7. The support rod 6 is supported by a base (not shown). A rotary shaft 8 is inserted into the front housing 2. This rotary shaft 8 comprises a hollow cylindrical portion 8a located in the middle thereof, a shaft portion 8b formed in one piece on the front end of the hollow cylindrical portion 8a, and a shaft portion 8c fixed onto the rear end of the hollow cylindrical portion 8a. A spray head 9 made of metallic material is fixed onto the shaft portion 8b of the rotary shaft 8 by a nut 10. The spray head 9 comprises a spray head supporting member 12 forming therein an annular space 11, and a cup shaped spray head body 13 fixed onto the spray head supporting member 12. As illustrated in Figs. 1 and 2, a plurality of paint outflow bores 16, each opening into the annular space 11 and smoothly connected to an inner wall 15 of the spray head body 13, is formed in an outer cylindrical portion 14 of the spray head supporting member 12. As illustrated in Fig. 1, an end plate 17 is fixed onto the front end of the front housing 2, and a paint injector 18 is mounted on the end plate 17. The paint injector 18 is connected to a paint reservoir 20 via a paint feed pump 19, and a nozzle 21 of the paint injector 18 is directed to the cylindrical inner wall of the outer cylindrical portion 14 of the spray head supporting member 12.

A pair of non-contact type tilting pad radial air bearings 22 and 23 is arranged in the front housing 2, and the rotary shaft 8 is rotatably supported on the front housing 2 via a pair of the tilting pad radial air bearings 22 and 23. Both the tilting pad radial air bearings 22 and 23 have the same construction and, therefore, the construction of only the tilting pad radial air bearing 22 will be hereinafter described. Referring to Figs. 1 and 3, the tilting pad radial air bearing 22 comprises three pads 24, 25, 26 arranged to be spaced from the outer circumferential wall of the hollow cylindrical portion 8a of the rotary shaft 8 by an extremely small distance, and three support pins 27, 28, 29 supporting the pads 24, 25, 26, respectively. Spherical tips 30, 31, 32 are formed in one piece on the inner ends of the support pins 27, 28, 29, and are in engagement with spherical recesses formed on the rear faces of the pads 24, 25, 26, respectively. Consequently, the pads 24, 25, 26 can swing about the corresponding spherical tips 30, 31, 32, each functioning as a fulcrum. A bearing support frame 33 is fixed onto the outer circumferential wall of the front housing 2 by means of, for example, bolts (not shown), and the support pins 28, 29 are fixed onto the bearing support frame 33 by means of nuts 34, 35, respectively. In addition, one end of a support arm 36 having a resilient plate shaped portion 36a is fixed onto the bearing support frame 33 by means of a bolt 37, and the other end of the support arm 36 is fixed onto the support pin 27 by means of a nut 38. Consequently, the pad 24 is urged onto the hollow cylindrical portion 8a of the rotary shaft 8 due to the resilient force of the support arm 36.

Turning to Fig. 1, a pair of disc shaped runners 39, 40 is inserted into the shaft portion 8c of the rotary shaft 8 and fixed onto the shaft portion 8c via a spacer 41 and a turbine wheel 42 by means of a nut 43. A stationary annular plate 44 is arranged between the runners 39 and 40, and the runners 39, 40 and the annular plate 44 construct a non-contact type thrust air bearing. As illustrated in Fig. 1, each of the runners 39, 40 is arranged to be spaced from the annular plate 44 by a slight distance. The annular plate 44 is fixed onto the front housing 2 via a pair of O rings 45, 46. As illustrated in Figs. 1 and 4, an annular groove 47, extending along the outer circumferential wall of the annular plate 44, is formed on the inner wall of the front housing 2 and connected to an air feed pump 49 via a compressed air supply hole 48 which is formed in the front housing 2. A plurality of air passages 50, each extending radially inwardly from the annular groove 47, is formed in the annular plate 44. In addition, a plurality of air outflow bores 51, each extending towards the runner 40 from the inner end portion of the corresponding air passage 50, is formed in the annular plate 44, and a plurality of air outflow bores 52, each extending towards the runner 39 from the inner end portion of the corresponding air passage 50, is formed in the annular plate 44.

As illustrated in Fig. 1, a turbine nozzle holder 53 is fixed onto the front housing 2 at a position adjacent to the annular plate 44, and an annular air supply chamber 54 is formed between the turbine nozzle holder 53 and the front housing 2. The air supply chamber 54 is connected to a compressor 56 via a compressed air supply hole 55. The air supply chamber 54 comprises a compressed air injecting nozzle 57 having a plurality of guide vanes (not shown), and turbine blades 58 of the turbine wheel 42 are arranged to face the compressed air injecting nozzle 57. A housing interior chamber 59, in which the turbine wheel 42 is arranged, is connected to the atmosphere via a discharge hole 60 which is formed in the rear housing 3. The compressed air fed into the air supply chamber 54 from the compressor 56 is injected into the housing interior chamber 59 via the compressed air injecting nozzle 57. At this time, the compressed air injected from the injecting nozzle 57 provides the rotational force for the turbine wheel 42 and, thus, the rotary shaft 8 is rotated at a high speed. Then, the compressed air injected from the injecting nozzle 57 is discharged to the atmosphere via the discharge hole 60.

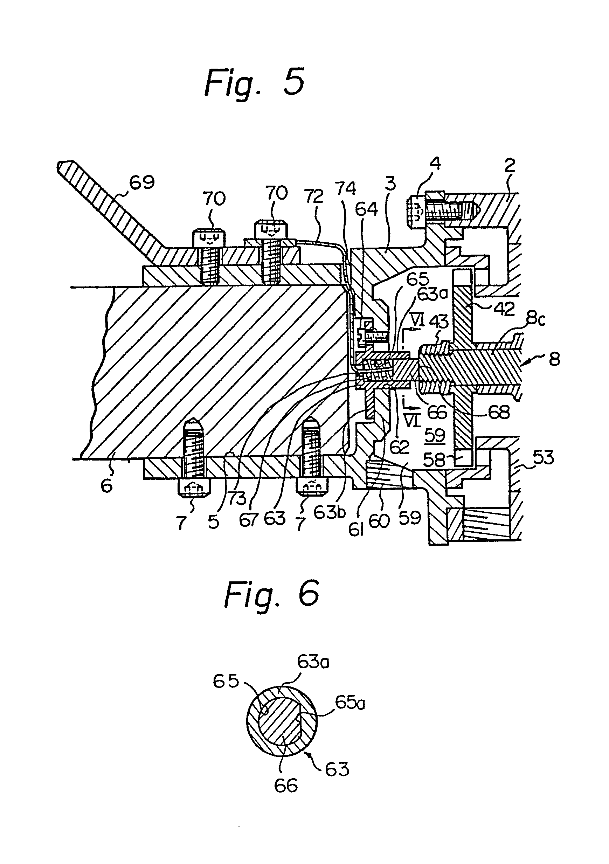

As illustrated in Fig. 5, a through-hole 62, arranged coaxially with the rotation axis of the rotary shaft 8, is formed on an end wall 61 of the rear housing 3, which defines the housing interior chamber 59, and the cylindrical portion 63a of an electrode holder 63 is fitted into the through-hole 62. In addition, the electrode holder 63 has an outwardly extending annular flange 63b formed in one piece thereon, and the annular flange 63b is fixed onto the end wall 61 by means of bolts 64. A bore 65, extending in the axial direction of the rotary shaft 8, is formed in the electrode holder 63, and an electrode 66, made of wear resisting materials such as carbon, is inserted into the bore 65 so as to be movable therein. As illustrated in Fig. 6, the bore 65 of the electrode holder 63 has a generally cylindrical inner wall having a flat inner wall portion 65a, and the electrode 66 has an outer contour shape corresponding to the shape of the cross-section of the bore 65. The flat inner wall portion 65a serves to prevent the electrode 66 from rotating in the electrode holder 63. A compression spring 67 is inserted between the electrode 66 and the electrode holder 63 so that the tip face 68 of the electrode 66 is urged onto the end face of the shaft portion 8c of the rotary shaft 8 due to the spring force of the compression spring 67. An external terminal 69 is fixed onto the outer wall of the rear housing 3 by means of bolts 70 and connected to a high voltage generator 71 used for generating a negative high voltage ranging from —60 KV to —90 KV. In addition, one end of an electrical wire 72 is fixed onto the rear end face of the electrode 66. The wire 72 is led to the exterior of the rear housing 3 via an opening 73 formed on the electrode holder 63 and via an opening 74 formed in the rear housing 3, and the other end of the wire 72 is connected onto the external terminal 69 by means of the bolt 70. Consequently, the negative high voltage is applied to both the front housing 2 and the rear housing 3, and it is also applied to the spray head 9 via the wire 72, the electrode 66 and the rotary shaft 8. By directly interconnecting the electrode 66 to the external terminal 69 via the wire 72 as mentioned above, a negative high voltage can be applied to the spray head 9 without causing a voltage drop and, therefore, a high negative voltage, having a predetermined level, can be always applied to the spray head 9.

In operation, paint is injected from the nozzle 21 of the paint injector 18 onto the circumferential inner wall of the outer cylindrical portion 14 of the spray head supporting member 12. Then, the paint, injected onto the circumferential inner wall of the outer cylindrical portion 14, flows out onto the inner wall 15 of the spray head body 13 via the paint outflow bores 16 due to the centrifugal force caused by the rotation of the spray head 9. After this, the paint spreads on the inner wall 15 of the spray head body 13 and flows on the inner wall 15 in the form of a thin film. Then, the paint reaches the tip 13a of the spray head body 13. As mentioned previously, a negative high voltage is applied to the spray head 9. Consequently, when the paint is sprayed from the tip 13a of the spray head body 13 in the form of fine particles, the particles of the sprayed paint are charged with electrons. Since the surface to be painted is normally grounded, the paint particles charged with electrons are attracted towards the surface to be painted due to electrical force and, thus, the surface to be painted is painted.

As mentioned previously, the rotary shaft 8 is supported by a pair of the tilting pad radial air bearings 22, 23 and a single thrust air bearing which is constructed by the runners 39, 40 and the stationary annular plate 44. In the tilting pad radial air bearings 22, 23, when the rotary shaft 8 is rotated, ambient air is sucked into the extremely small clearances formed between the hollow cylindrical portion 8a and the pads 24, 25, 26. Then, the air thus sucked is compressed between the hollow cylindrical portion 8a and the pads 24, 25, 26 due to a so-called wedge effect of air, and therefore, the pressure of the air between the hollow cylindrical portion 8a and the pads 24, 25, 26 is increased. As a result of this, the force radially supporting the rotary shaft 8 is generated between the hollow cylindrical portion 8a and the pads 24, 25, 26. On the other hand, in the above-mentioned thrust air bearing, compressed air is fed into the air passages 50 from the air feed pumps 49 via the annular groove 47. Then, the compressed air is injected from the air outflow bores 51 into the clearance between the annular plate 44 and the runner 40, and also, injected from the air outflow bores 52 into the clearance between the annular plate 44 and the runner 39. As a result of this, the pressure, which is necessary to maintain the above-mentioned clearances formed on each side of the annular plate 44, is generated between the annular plate 44 and the runners 39, 40. Consequently, the rotary shaft 8 is supported by the thrust air bearing and a pair of the radial air bearings under a non-contacting state via a thin air layer. As is known to those skilled in the art, the coefficient of the viscosity of air is about one thousandth of that of the viscosity of lubricating oil. Consequently, the frictional loss of the air bearing, which uses air as a lubricant, is extremely small. Therefore, since the amount of heat caused by the occurrence of the frictional loss is extremely small, it is possible to increase the rotating speed of the rotary shaft 8 to a great extent. In the embodiment illustrated in Fig. 1, it is possible to rotate the rotary shaft 8 at a high speed of about 80,000 r.p.m.

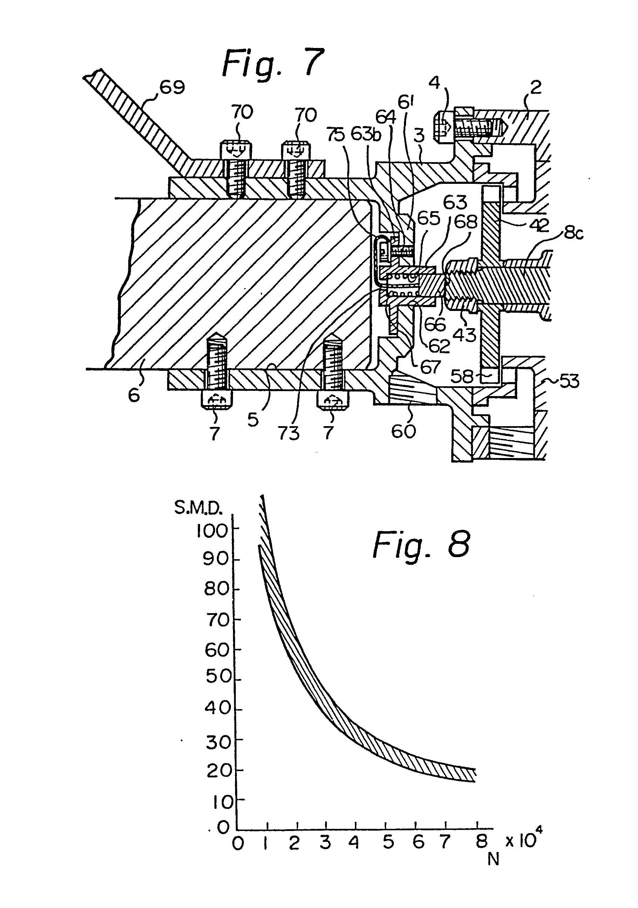

Fig. 8 illustrates the relationship between the size of the particles of sprayed paint and the rotating speed of the spray head in the case wherein the spray head 9 (Fig. 1) having a diameter of 75 mm is used. In Fig. 8, the ordinate S.M.S. indicates the mean diameter ($\mu$m) of paint particles, which is indicated in the form of a Sauter mean diameter, and the abscissa N indicates the number of revolutions per minute (r.p.m.) of the spray head 9. As mentioned previously, in a conventional rotary type electrostatic spray painting device, the maximum number of revolutions per minute N of the spray head is about 20,000 r.p.m. Consequently, from Fig. 8, it will be understood that, if the spray head having a diameter of 75 mm is used in a conventional rotary type electrostatic spray painting device, the minimum mean diameter S.M.D. of paint particles is in the range of 55 $\mu$m to 65 $\mu$m. Contrary to this, in the present invention, the maximum number of revolutions per minute N is about 80,000 r.p.m. Consequently, from Fig. 8, it will be understood that the paint can be divided into fine particles to such a degree that the mean diameter S.M.D. of paint particles is in the range of 15 $\mu$m to 20 $\mu$m. Therefore, it will be understood that, in a rotary type electrostatic spray painting device according to the present invention, the size of paint particles can be greatly reduced, as compared with that of paint particles in a conventional rotary type spray painting device. In addition, as mentioned previously, the same negative high voltage is applied to the housings 2, 3 and the rotary shaft 8. Consequently, there is no danger that an electric discharge will occur between the housings 2, 3 and the rotary shaft 8.

Fig. 7 illustrates another embodiment. In this embodiment, an electrical wire 75, connected to the rear end face of the electrode 66, is led to the exterior of the electrode holder 63 via the opening 73 formed in the electrode holder 63, and the wire 75 is fixed onto the end wall 61 together with the annular flange 63b of the electrode holder 63 by means of the bolt 64.

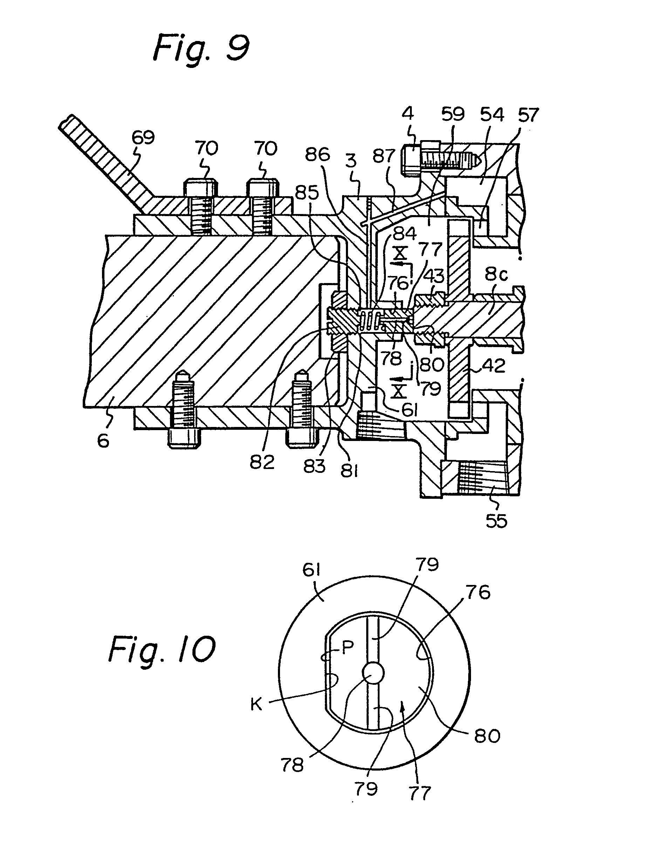

Figs. 9 and 10 illustrate a further embodiment. In this embodiment, as illustrated in Fig. 9, a generally cylindrical through-hole 76 is formed coaxially with the rotation axis of the rotary shaft 8 in an end wall 61 of the rear housing 3, which defines the housing interior chamber 59, and a generally cylindrical electrode 77, made of wear resisting materials such as carbon, is inserted into the hole 76 so as to be movable therein. As illustrated in Fig. 10, the inner circumferential wall of the hole 76 has a flat wall portion K, and the other circumferential wall of the electrode 77 has a flat wall portion P which is in engagement with the flat wall portion K of the hole 76. By forming the flat inner wall portions K and F on the inner circumferential wall of the hole 76 and the outer circumferential wall of the electrode 77, respectively, as mentioned above, it is possible to prevent the electrode 77 from rotating within the hole 76. As illustrated in Figs. 9 and 10, a cooling air flow passage 78 is formed in the electrode 77 so as to extend in the axial direction thereof, and a pair of grooves 79, radially extending outwardly from the cooling air flow passage 78, is formed on the tip face 80 of the electrode 77. An internal screw thread 81 is formed on the rear end of the inner wall of the hole 76, and an adjusting screw 82 is screwed into the threaded rear end of the hole 76. In addition, a nut 83 is screwed onto the adjusting screw 82 for preventing the adjust screw 82 from loosening. A compression spring 84 is inserted between the adjusting screw 82 and the electrode 77 so that the tip face 80 of the electrode 77 is urged onto the end face of the shaft portion 8c of the rotary shaft 8. A cooling air supply chamber 85, formed between the adjusting screw 82 and the electrode 77, is connected via cooling air inflow passages 86, 87 to the air supply chamber 54 of the turbine nozzle holder 53. Consequently, a part of the compressed air, fed into the air supply chamber 54 from the compressor 56, is fed into the air supply chamber 85 via the cooling air inflow passages 86, 87 and then flows out into the housing interior chamber 59 via the cooling air flow passage 78 and the radial grooves 79. When the rotary shaft 8 is rotated, frictional heat is produced in the contacting face of the electrode 77 and in the contacting end face of the shaft portion 8c. However, in the present invention, the frictional heat is absorbed by the cooling air flowing within the radial grooves 79. Consequently, since the increase in temperature of the electrode 77 is suppressed, it is possible to prevent the electrode 77 from rapidly wearing out.

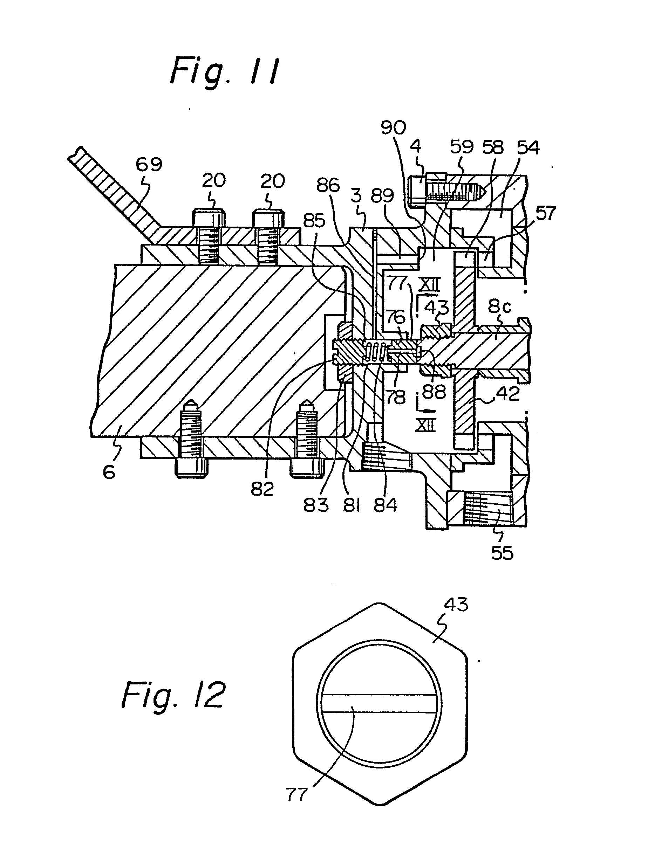

Figs. 11 and 12 illustrate a still further embodiment. In this embodiment, a groove 88, which is always connected to the cooling air flow passage 78 formed in the electrode 77, is formed on the end face of the shaft portion 8c of the rotary shaft 8. In addition, the cooling air supply chamber 85, formed in the hole 76, is connected to the housing interior chamber 59 via the cooling air inflow passage 86 and a cooling air inflow passage 89, and an inlet opening 90 of the cooling air inflow passage 89 is directed to the turbine blades 58 of the turbine wheel 42. In this embodiment, air, injected from the compressed air injecting nozzle 57 via the turbine blades 58, is forced into the cooling air inflow passage 89 due to the dynamic pressure of the air thus injected and, then, the air flows out into the housing interior chamber 59 via the cooling air flow passage 78 and the groove 88. On the other hand, when the rotary shaft 8 is rotated, the air within the groove 88 is pushed out into the housing interior chamber 59 due to the centrifugal force. Consequently, the groove 88 has a function of a suction pump when the rotary shaft 8 is rotated. Therefore, in this embodiment, air is fed into the groove 88 due to the dynamic pressure acting on the cooling air inflow passage 89 and due to the function of the suction pump. In addition, when the compressed air in the air supply chamber 54 is injected from the compressed air injecting nozzle 57, the temperature of the compressed air is reduced by about 10°C. Therefore, it is possible to feed the air, having a low temperature, into the cooling air inflow passage 89.

In the embodiments in Figs. 9 and 11, a wire for electrically connecting the electrode 77 to the external terminal 69 or the rear housing 3, is not illustrated. However, in these embodiments, the electrode 77 is electrically connected to the external terminal 69 or the rear housing 3 via a wire as illustrated in Figs. 5 and 7.

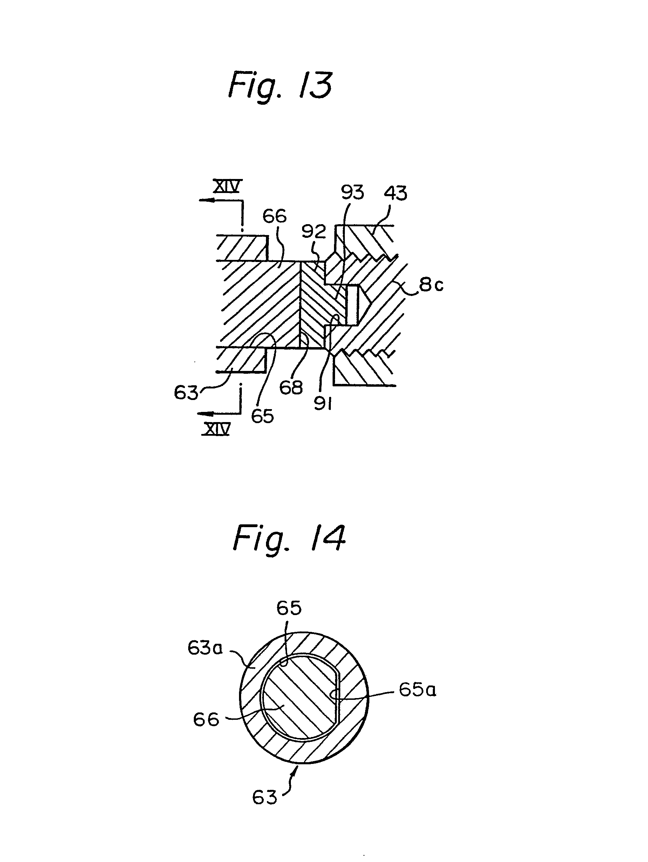

Figs. 13 and 14 illustrate a still further embodiment. In the embodiment, a bore 91 is formed on the center of the end face of the shaft portion 8c. A projection 93 of a slide plate 92 is press-fitted into the bore 91 and, thus, the slide plate 92 is fixed onto the end face of the shaft portion 8c. The slide plate 92 is made of material having a high electrical conductivity and a low frictional coefficient such as iron alloy, copper alloy or aluminium alloy, and the face of the slide plate 92, which engages the electrode 66, is shaped in the form of a flat surface. In order to improve wear resistance, the face of the slide plate 92, which engages the electrode 66, can be coated by a hard chrome plating layer or subjected to nitridation. When the rotary shaft 8 rotates, the slide plate 92 is in contact with the end face of the electrode 66 while sliding thereon. However, since the face of the slide plate 92, which engages the end face of the electrode 66, is smooth and hard, the end face of the electrode 66 is less easily scratched. In addition, since the slide plate 92 is made of material having a low frictional coefficient, it is possible to prevent the electrode 66 from rapidly wearing.

According to the present invention, since the spray head can be rotated at a high speed of about 80,000 r.p.m., the size of the particles of sprayed paint can be reduced to a great extent. As a result of this, the size of paint particles becomes smaller than that of paint particles obtained by using a conventional air injection type electrostatic spray painting device. Consequently, in the present invention, it is possible to form an extremely beautiful finished surface and, therefore, a rotary type electrostatic spray painting device, can be used for carrying out a finish painting step in the paint process, for example, for bodies of motor cars. In addition, in the present invention, since paint particles are created by rotating the spray head at a high speed, but are not created by air injection, the amount of the paint used to effectively paint the surface to be painted is about 90 percent of the amount of the paint sprayed from a rotary type electrostatic spray painting device. Consequently, since a large part of the sprayed paint is not dispersed within the factory, it is possible to prevent the problem previously mentioned, regarding air pollution from arising. In addition, the amount of paint used can be reduced.

**Claims**

1. A rotary type electrostatic spray painting device comprising:

a metallic housing (2, 3);

a metallic rotary shaft (8) rotatably arranged in said housing and having a front end (8b) and a rear end (8c);

a cup shaped metallic spray head (9) fixed onto the front end (8b) of said rotary shaft and having a cup shaped inner wall (15);

feeding means (18) for feeding a paint onto said cup shaped inner wall;

drive means (42) cooperating with said rotary shaft for rotating said rotary shaft;

a generator (71) generating a negative high voltage and having an output (69) connected to said housing; and

electrode means arranged in said housing, which applies said negative high voltage to said electrode means, and having an electrode (66; 77) arranged to continuously contact the rear end (8c) of said rotary shaft, characterized by

non-contact type radial bearing means (22, 23) arranged in said housing and cooperating with said rotary shaft for radially supporting said rotary shaft under a non-contacting state;

non-contact type thrust bearing means (39, 40, 44) arranged in said housing and cooperating with said rotary shaft for axially supporting said rotary shaft under a non-contacting state;

said electrode means having an electrical wire (72) which is connected directly to said electrode and interconnects said electrode to said housing (2, 3) or to said output connected to said housing (2, 3) for assisting the supply of said negative high voltage to said spray head (9).

2. A rotary type electrostatic spray painting device as claimed in Claim 1, wherein said electrode (66) is made of carbon.

3. A rotary type electrostatic spray painting device as claimed in Claim 1, wherein the rear end (8c) of said rotary shaft has a flat end face (68) extending perpendicular to the rotation axis of said rotary shaft, said electrode (66) being arranged coaxially with the rotation axis of said rotary shaft (8) and having an inner end face and an outer flat end face which is in continuous contact with the flat end face of the rear end of said rotary shaft, said electrical wire having a first end and a second end connected to the inner end face of said electrode, the first end of said electrical wire being connected to said housing.

4. A rotary type electrostatic spray painting device as claimed in claim 3, wherein said device further comprises an external terminal (69) fixed onto said housing and connected to the output of said generator (71), the first end of said electrical wire being connected to said external terminal.

5. A rotary type electrostatic spray painting device as claimed in claim 1, wherein said electrode means further comprises an electrode holder (63) fixed onto said housing and having therein a bore (65), into which said electrode is slidably inserted, and a compression spring (67) arranged in the bore of said electrode holder between said electrode holder and said electrode.

6. A rotary type electrostatic spray painting device as claimed in claim 1, wherein said housing has a bore (65), into which said electrode is slidably inserted, a compression spring (67) being arranged in said bore for biasing said electrode (66).

7. A rotary type electrostatic spray painting device as claimed in claim 5 or 6, wherein said bore (65) has a generally cylindrical inner wall having a flat portion (65a), said electrode (66) having an outer contour shape which corresponds to the shape of the cross-section of said bore.

8. A rotary type electrostatic spray painting device as claimed in claim 1, wherein said electrode (77) has an inner end and an outer end which is in contact with the rear end of said rotary shaft (8) for electrically connecting said output to said spray head, said device comprising a cooling air source and a cooling air passage having a cooling air inlet and an air passage portion (78) which extends within said electrode and has a cooling air outlet formed on the outer end of said electrode, said cooling air inlet being connected to said cooling air source for feeding a cooling air from said cooling air source into said cooling air passage to discharge the cooling air from said cooling air outlet.

9. A rotary type electrostatic spray painting device as claimed in claim 8, wherein said drive means comprises a compressor (56) producing compressed air, an air injection nozzle arranged in said housing and connected to said compressor, and a turbine wheel (42) fixed onto said rotary shaft and having turbine blades which are arranged to face said air injection nozzle, said cooling air source being said compressed air produced in said compressor (56).

10. A rotary type electrostatic spray painting device as claimed in claim 9, wherein said housing has therein an air supply chamber (54) connecting said air injection nozzle to said compressor, said cooling air inlet being connected to said air supply chamber.

11. A rotary type electrostatic spray painting device as claimed in claim 9, wherein said cooling air inlet is arranged to face said turbine blades at a position opposite to said air injection nozzle.

12. A rotary type electrostatic spray painting device as claimed in any of claims 8 to 11, wherein the rear end of said rotary shaft (8) has a flat end face extending perpendicular to the rotation axis of said rotary shaft, said electrode (8) being arranged coaxially with the rotation axis of said rotary shaft, the outer end of said electrode (77) being shaped in the form of a flat face, a radially extending air outflow passage, connected to said cooling air outlet, being formed between the flat end face of said rotary shaft and the flat outer end of said electrode.

13. A rotary type electrostatic spray painting device as claimed in claim 12, wherein said air outflow passage is a pair of grooves (79) formed on the flat outer end of said electrode.

14. A rotary type electrostatic spray painting device as claimed in claim 12, wherein said air outflow passage is a groove (88) formed on the flat end face of said rotary shaft.

15. A rotary type electrostatic spray painting device as claimed in claim 1, wherein said device comprises a slide plate (92) fixed onto the rear end of said rotary shaft and having a rear face and a front face which is in continuous contact with said electrode (66).

16. A rotary type electrostatic spray painting device as claimed in claim 1, wherein said non-contact type radial bearing means comprises a pair of radial air bearings (22, 23).

17. A rotary type electrostatic spray painting device as claimed in claim 16, wherein each of said radial air bearings (22, 23) comprises a bearing frame (33) connected to said housing, a plurality of pads (24, 25, 26), each having an inner face which extends along a circumferential outer wall of said rotary shaft and is spaced from the circumferential outer wall of said rotary shaft by a slight distance, and a plurality of support pins (27, 28, 29), each being connected to said bearing frame and pivotally supporting said corresponding pad.

18. A rotary type electrostatic spray painting device as claimed in claim 17, wherein each of said radial air bearings further comprises a resilient arm (36) through which one of said support pins is connected to said bearing frame for biasing said corresponding pad to the circumferential outer wall of said rotary shaft.

19. A rotary type electrostatic spray painting device as claimed in claim 1, wherein said non-contact type thrust bearing means comprises a thrust air bearing.

20. A rotary type electrostatic spray painting device as claimed in claim 19, wherein said non-contact type thrust bearing means further comprises an air feed pump (49) for producing compressed air, said thrust air bearing comprising a stationary annular plate (44) having opposed side walls, and a pair of runners (39, 40) fixed onto said rotary shaft and arranged on each side of said annular plate, each of said runners being spaced from the corresponding side wall of said annular plate (44), a plurality of air outflow bores (51) connected to said air feed pump being formed on the opposed side walls of said annular plate.

**Patentansprüche**

1. Elektrostatische Spritzlackiervorrichtung vom Drehtyp mit:

einem metallenen Gehäuse (2, 3);
einer metallenen drehbaren Welle (8), die drehbar im Gehäuse angeordnet ist und ein vorderes Ende (8b) und eine hinteres Ende (8c) hat;
einem becherförmigen metallenen Spritzkopf (9), der auf dem vorderen Ende (8b) der drehbaren Welle befestigt ist und eine becherförmige innere Wand (15) hat;
eine Zuleitungseinrichtung (18) zum Einführen von Farbe auf die becherförmige innere Wand;
eine Antriebseinrichtung (42), die mit der drehbaren Welle zusammenwirkt, um die drehbare Welle zu drehen;
einem Generator (71), der eine negative Hochspannung erzeugt und einen Ausgang (69) hat, der mit dem Gehäuse verbunden ist; und
eine im Gehäuse angeordnete Elektrodeneinrichtung, zu der die negative Hochspannung vom Gehäuse übertragen wird und die eine Elektrode (66, 77) aufweist, die so angeordnet ist, daß sie dauernd das hintere Ende (8c) der Welle berührt; gekennzeichnet durch eine berührungslose Radiallagereinrichtung (22, 23), die im Gehäuse angeordnet ist und mit der Welle in der Weise zusammenwirkt, daß sie die Welle berührungslos radial stützt; eine berührungslose Drucklagereinrichtung (39, 40, 44), die im Gehäuse angeordnet ist und mit der Welle in der Weise zusammenwirkt, daß sie die Welle berührunglos axial stützt; wobei die Elektrodeneinrichtung einen elektrischen Draht (72) aufweist, der direkt mit der Elektrode verbunden ist und die Elektrode mit dem Gehäuse (2, 3) oder mit dem Gehäuse (2, 3) verbundenen Ausgang verbindet, um die Speisung des Spritzkopfs (9) mit der negativen Hochspannung zu unterstützen.

2. Elektrostatische Spritzlackiervorrichtung vom Drehtyp nach Anspruch 1, dadurch gekennzeichnet, daß die Elektrode (66) aus Kohlenstoff besteht.

3. Elektrostatische Spritzlackiervorrichtung vom Drehtyp nach Anspruch 1, dadurch gekennzeichnet, daß das hintere Ende (8c) der Welle, eine flache Endfläche (68) aufweist, die sich senkrecht zur Rotationsachse der Welle erstreckt, daß die Elektrode (66) koaxial zur Rotationsachse der Welle (8) angeordnet ist und eine innere Endfläche und eine äußere flache Endfläche aufweist, die dauernd in Berührung mit der flachen Endfläche des hinteren Endes der Welle steht, daß der elektrische Draht, ein erstes Ende und ein zweites Ende aufweist, das mit der inneren Endfläche der Elektrode verbunden ist, wobei das erste Ende des elektrischen Drahtes mit dem Gehäuse (2, 3) verbunden ist.

4. Elektrostatische Spritzlackiervorrichtung vom Drehtyp nach Anspruch 3, dadurch gekennzeichnet, daß die Vorrichtung ferner eine Außenklemme (69) umfaßt, die am Gehäuse befestigt ist und mit dem Ausgang des Generators (71) verbunden ist, wobei das erste Ende des elektrischen Drahtes mit der Außenklemme verbunden ist.

5. Elektrostatische Spritzlackiervorrichtung von Drehtyp nach Anspruch 1, dadurch gekennzeichnet, daß die Elektrodeneinrichtung ferner einen Elektrodenhalter (63), der am Gehäuse angebracht ist und der innen eine Bohrung (65) hat, in die die Elektrode verschiebbar eingesetzt ist, und eine Druckfeder umfaßt, die in der Bohrung des Elektrodenhalters zwischen dem Elektrodenhalter und der Elektrode angeordnet ist.

6. Elektrostatische Spritzlackiervorrichtung vom Drehtyp nach Anspruch 1, dadurch gekennzeichnet, daß das Gehäuse eine Bohrung (65) aufweist, in die die Elektrode (verschiebbar eingesetzt ist, wobei eine Druckfeder (67), die in der Bohrung angeordnet ist, die Elektrode (66) vorspannt.

7. Elektrostatische Spritzlackiervorrichtung vom Drehtyp nach Anspruch 5 oder 6, dadurch gekennzeichnet, daß die Bohrung (65) eine im allgemeinen zylinderische Innenwand hat, die einen abgeflachten Teil (65a) hat, und daß die Elektrode (66) eine Umrißform hat, die der Querschnittsform der Bohrung entspricht.

8. Elektrostatische Spritzlackiervorrichtung vom Drehtyp nach Anspruch 1, dadurch gekennzeichnet, daß die Elektrode (77) ein inneres Ende und ein äußeres Ende hat, das mit dem hinteren Ende der drehbaren Welle (8) in Verbindung steht, um den Ausgang mit dem Spritzkopf elektrisch zu verbinden, daß die Vorrichtung eine Kühlluftquelle und einen Kühlluftdurchlaß umfaßt, der einen Kühllufteinlaß und einen Luftdurchlaßabschnitt (78) aufweist, der innerhalb der Elektrode verläuft und einen Kühlluftauslaß hat, der am äußeren Ende der Elektrode ausgebildet ist, wobei der Kühllufteinlaß mit der Kühlluftquelle verbunden ist, um Kühlluft von der Kühlluftquelle in den Kühlluftdurchlaß zu führen, damit die Kühlluft durch den Kühlluftauslaß ausströmt.

9. Elektrostatische Spritzlackiervorrichtung vom Drehtyp nach Anspruch 8, dadurch gekennzeichnet, daß die Antriebseinrichtung einen Kompressor (56), der Druckluft liefert, eine Lufteinblasdüse, die im Gehäuse angeordnet ist und mit dem Kompressor verbunden ist, und ein Turbinenrad (42) umfaßt, das auf der drehbaren Welle befestigt ist und Turbinenschaufeln hat, die so angeordnet sind, daß sie der Lufteinblasdüse Zugewandt sind, wobei die Kühlluftquelle die vom Kompressor (56) gelieferte Druckluft ist.

10. Elektrostatische Spritzlackiervorrichtung vom Drehtype nach Anspruch 9, dadurch gekennzeichnet, daß sich im Gehäuse eine Luftversorgungskammer (54) befindet, die die Lufteinblasdüse mit dem Kompressor verbindet, wobei der Kühllufteinlaß mit der Luftversorgungskammer verbunden ist.

11. Elektrostatische Spritzlackiervorrichtung vom Drehtyp nach Anspruch 9, dadurch gekennzeichnet, daß der Kühllufteinlaß so angeordnet ist, daß er einer zur Lufteinblasdüse entgegengesetzten Stelle der Turbinenschaufel zugewandt ist.

12. Elektrostatische Spritzlackiervorrichtung vom Drehtyp nach einem der Ansprüche 8 bis 10, dadurch gekennzeichnet, daß das hintere Ende der drehbaren Welle (8) eine flache Endfläche hat, die sich senkrecht zur Rotationsachse der Welle erstreckt, daß die Elektrode (8) koaxial zur Rotationsachse der Welle angeordnet ist, daß das äußere Ende der Elektrode (77) in Form einer flachen Fläche gestaltet ist, und daß ein mit dem Kühlluftauslaß verbundener, sich radial erstreckender Luftauslaßkanal zwischen der flachen Endfläche der Welle und dem flachen äußeren Ende der Elektrode ausgebildet ist.

13. Elektrostatische Spritzlackiervorrichtung vom Drehtyp nach Anspruch 12, dadurch gekennzeichnet, daß der Luftauslaßkanal aus einem Paar Nuten (79) besteht, die am flachen äußeren Ende der Elektrode ausgebildet sind.

14. Elektrostatische Spritzlackiervorrichtung vom Drehtyp nach Anspruch 12, dadurch gekennzeichnet, daß der Luftauslaßkanal aus einer Nut (88) besteht, die an der flachen Endfläche der Welle ausgebildet ist.

15. Elektrostatische Spritzlackiervorrichtung vom Drehtyp nach Anspruch 1, dadurch gekennzeichnet, daß die Vorrichtung eine Gleitplatte (92) umfaßt, die am hinteren Ende der drehbaren Welle befestigt ist und eine hintere Fläche und eine vordere Fläche hat, die in ständiger Berührung mit der Elektrode (66) steht.

16. Elektrostatische Spritzlackiervorrichtung vom Drehtyp nach Anspruch 1, dadurch gekennzeichnet, daß die berührungslose Radiallagereinrichtung ein Paar Radialluftlager (22, 23) umfaßt.

17. Elektrostatische Spritzlackiervorrichtung vom Drehtyp nach Anspruch 16, dadurch gekennzeichnet, daß jedes der Radialluftlager (22, 23) ein Lagergehäuse (33), das mit dem Gehäuse verbunden ist, eine Vielzahl von Lagerschalen (24, 25, 26), von denen jede eine Innenfläche hat, die sich entlang einer äußeren Umfangswand der Welle erstreckt und mit geringem Abstand zur äußeren Umfangswand der Welle angeordnet sind, und eine Vielzahl von Haltestiften (27, 28, 29) umfaßt, von denen jeder mit dem Lagergehäuse verbunden ist und gelenkig die entsprechende Lagerschale stützt.

18. Elektrostatische Spritzlackiervorrichtung vom Drehtyp nach Anspruch 17, dadurch gekennzeichnet, daß jedes Radialluftlager einen federnden Arm (36) hat, der einen der Haltestifte mit dem Lagergehäuse derart verbindet, daß die entsprechende Lagerschale gegen die äußere Umfangswand der Welle gedrückt wird.

19. Elektrostatische Spritzlackiervorrichtung vom Drehtyp nach Anspruch 1, dadurch gekennzeichnet, daß die berührungslose Drucklagereinrichtung ein Druckluftlager umfaßt.

20. Elektrostatische Spritzlackiervorrichtung vom Drehtyp nach Anspruch 19, dadurch gekennzeichnet, daß die berührungslose Drucklagereinrichtung ferner eine Druckluftpumpe (49) umfaßt, die Druckluft liefert, daß das Druckluftlager eine stationäre ringförmige Platte (44), die entgegengesetzte Seitenwände hat, und ein Paar Läufer (39, 40) umfaßt, die an der Welle befestigt sind und auf jeder Seite der ringförmigen Platte angeordnet sind, wobei jeder der Läufer mit einem Zwischenraum zur entsprechenden Seitenwand der ringförmigen Platte (44) angeordnet ist, wobei eine Vielzahl von mit der Druckluftpumpe verbundenen Luftausströmbohrungen (51) in den entgegengesetzten Seitenwänden der ringförmigen Platte ausgebildet sind.

**Revendications**

1. Un dispositif de peinture par pulvérisation électrostatique du type rotatif comprenant:

un boîtier métallique (2, 3);
un arbre rotatif métallique (8) monté à rotation dans ledit boîtier et ayant une extrémité avant (8b) et une extrémité arrière (8c);
une tête de pulvérisation métallique (9) en forme de cuvette fixée à l'extrémité avant (8b) dudit arbre rotatif et ayant une paroi intérieure (15) en forme de cuvette;
des moyens d'alimentation (18) pour introduire de la peinture sur ladite paroi intérieure en forme de cuvette;
des moyens d'entraînement (42) coopérant avec ledit arbre rotatif pour faire tourner ledit arbre rotatif;
un générateur (71) engendrant une haute tension négative et ayant une sortie (69) connectée audit boîtier; et
des moyens formant électrode montés dans ledit boîtier, qui applique ladite haute tension négative auxdits moyens formant électrode, et ayant une électrode (66, 77) agencée de manière à être continuellement en contact avec l'extrémité arrière (8c) dudit arbre rotatif; caractérisé par
des moyens (22, 23) formant paliers radiaux du type sans contact montés dans ledit boîtier et coopérant avec ledit arbre rotatif pour porter radialement ledit arbre rotatif dans un état sans contact;
des moyens (39, 40, 44) formant palier de butée du type sans contact montés dans ledit boîtier et coopérant avec ledit arbre rotatif pour porter axialement ledit arbre rotatif dans un état sans contact;
lesdits moyens formant électrode comportant un fil électrique (72) qui est connecté directement à ladite électrode et interconnecte ladite électrode audit boîtier (2, 3) ou à ladite sortie connectée audit boîtier (2, 3) pour faciliter la fourniture de ladite haute tension négative à ladite tête de pulvérisation (9).

2. Un dispositif de peinture par pulvérisation électrostatique du type rotatif tel que revendiqué dans la revendication 1, dans lequel ladite électrode (66) est fabriquée en carbone.

3. Un dispositif de peinture par pulvérisation électrostatique du type rotatif tel que revendiqué dans la revendication 1, dans lequel l'extrémité arrière (8c) dudit arbre rotatif comporte une face d'extrémité plate (68) qui s'étend perpendiculairement à l'axe de rotation dudit arbre rotatif, ladite électrode (66) étant montée coaxialement avec l'axe de rotation dudit arbre rotatif (8) et ayant une face d'extrémité intérieure et une face d'extrémité extérieure plate laquelle est en contact continu avec l'extrémité arrière dudit arbre rotatif, ledit fil électrique ayant une première extrémité et une seconde extrémité connectée à la face d'extrémité intérieure de ladite électrode, la première extrémité dudit fil électrique étant connectée audit boîtier (2, 3).

4. Un dispositif de peinture par pulvérisation électrostatique du type rotatif tel que revendiqué dans la revendication 3, dans lequel ledit dispositif comprend, en outre, une borne externe (69) fixée audit boîtier et connectée à la sortie dudit générateur (71), la première extrémité dudit fil électrique étant connectée à ladite borne externe.

5. Un dispositif de peinture par pulvérisation électrostatique du type rotatif tel que revendiqué dans la revendication 1, dans lequel lesdits moyens formant électrode comprennent, en outre, un porte-électrode (63) fixé audit boîtier et dans lequel est formé un alésage (65) dans lequel ladite électrode est montée coulissante et un ressort de compression (67) monté dans l'alésage dudit porte-électrode entre ledit porte-électrode et ladite électrode.

6. Un dispositif de peinture par pulvérisation électrostatique du type rotatif tel que revendiqué dans la revendication 1, dans lequel ledit boîtier comporte un alésage (65) dans lequel ladite électrode est montée coulissante, un ressort de compression (67) étant monté dans ledit alésage pour solliciter élastiquement ladite électrode (66).

7. Un dispositif de peinture par pulvérisation électrostatique du type rotatif tel que revendiqué dans la revendication 5 ou 6, dans lequel ledit alésage (65) comporte une paroi intérieure approximativement cylindrique ayant une partie plate (65a), ladite électrode (66) ayant une forme de contour extérieur qui correspond à la forme de la section transversale dudit alésage.

8. Un dispositif de peinture par pulvérisation électrostatique du type rotatif tel que revendiqué dans la revendication 1, dans lequel ladite électrode (77) a une extrémité intérieure et une extrémité extérieure qui est en contact avec l'extrémité arrière dudit arbre rotatif (8) pour connecter électriquement ladite sortie à ladite tête de pulvérisation, ledit dispositif comprenant une source d'air de refroidissement et un passage d'air de refroidissement ayant un orifice d'entrée d'air de refroidissement et une partie (78) de passage d'air qui s'étend à l'intérieur de ladite électrode et comporte un orifice de sortie d'air de refroidissement formé sur l'extrémité extérieure de ladite électrode, ledit orifice d'entrée d'air de refroidissement étant relié à ladite source d'air de refroidissement pour introduire de l'air de refroidissement provenant de ladite source d'air de refroidissement dans ledit passage d'air de refroidissement afin de décharger l'air de refroidissement hors dudit orifice de sortie d'air de refroidissement.

9. Un dispositif de peinture par pulvérisation électrostatique due type rotatif tel que revendiqué dans la revendication 8, dans lequel lesdits moyens d'entraînement comprennent un compresseur (56) produisant de l'air comprimé, un distributeur d'injection d'air monté dans ledit boîtier et relié audit compresseur, et une roue de turbine (42) fixée audit arbre rotatif et ayant des aubes de turbine qui sont montées de façon à faire face audit distributeur d'injection d'air, ladite source d'air de refroidissement étant ledit air comprimé produit dans ledit compresseur (56).

10. Un dispositif de peinture par pulvérisation électrostatique du type rotatif tel que revendiqué dans la revendication 9, dans lequel ledit boîtier renferme une chambre (54) d'alimentation en air qui relie ledit distributeur d'injection d'air audit compresseur, ledit orifice d'entrée d'air de refroidissement étant relié à ladite chambre d'alimentation en air.

11. Un dispositif de peinture par pulvérisation électrostatique du type rotatif tel que revendiqué dans la revendication 9, dans lequel ledit orifice d'entrée d'air de refroidissement est monté de façon à faire face auxdites aubes de turbine dans un emplacement opposé audit distributeur d'injection d'air.

12. Un dispositif de peinture par pulvérisation électrostatique du type rotatif tel que revendiqué dans l'une quelconque des revendications 8 à 11, dans lequel l'extrémité arrière dudit arbre rotatif (8) a une face d'extrémité plate qui s'étend perpendiculairement à l'axe de rotation dudit arbre rotatif, ladite électrode (8) étant montée coaxialement avec l'axe de rotation dudit arbre rotatif, l'extrémité extérieure de ladite électrode (77) étant façonnée sous la forme d'une face plane, un passage d'écoulement d'air vers l'extérieur s'étendant radialement et, raccordé audit orifice de sortie d'air de refroidissement, étant formé entre la face d'extrémité plane dudit arbre rotatif et la face extérieure plane de ladite électrode.

13. Un dispositif de peinture par pulvérisation électrostatique du type rotatif tel que revendiqué dans la revendication 12, dans lequel ledit passage d'écoulement d'air vers l'extérieur est constitué par une paire de rainures (79) formées dans l'extrémité extérieure plate de ladite électrode.

14. Un dispositif de peinture par pulvérisation électrostatique du type rotatif tel que revendiqué dans la revendication 12, dans lequel ledit passage d'écoulement d'air vers l'extérieur est constitué par une rainure (88) formée dans la face d'extrémité plate dudit arbre rotatif.

15. Un dispositif de peinture par pulvérisation électrostatique du type rotatif tel que revendiqué dans la revendication 1, dans lequel ledit dispositif comprend une plaque glissante (92) fixée à l'extrémité arrière dudit arbre rotatif et ayant une face arrière et une face avant qui est en contact continu avec ladite électrode (66).

16. Un dispositif de peinture par pulvérisation électrostatique du type rotatif tel que revendiqué dans la revendication 1, dans lequel les moyens formant paliers radiaux comprennent une paire de paliers à air radiaux (22, 23).

17. Un dispositif de peinture par pulvérisation électrostatique du type rotatif tel que revendiqué dans la revendication 16, dans lequel chacun desdits paliers, à air radiaux (22, 23) comprend une monture (33) de paliers assemblée audit boîtier, plusieurs segments ou patins (24, 25, 26) dont chacun a une face intérieure qui s'étend le long d'une paroi circonférentielle extérieure dudit arbre rotatif et est espacée de la paroi circonférentielle extérieure dudit arbre rotatif d'une petite distance, et plusieurs tiges supports (27, 28, 29) dont chacune est assemblée à la monture de palier et porte à pivotement ledit segment correspondant.

18. Un dispositif de peinture par pulvérisation électrostatique du type rotatif tel que revendiqué dans la revendication 17, dans lequel chacun desdits paliers à air radiaux comporte, en outre, un bras élastique (36) par l'intermédiaire duquel l'une des tiges supports est assemblée à ladite monture de palier, pour solliciter élastiquement ledit patin correspondant vers la paroi circonférentielle extérieure audit arbre rotatif.

19. Un dispositif de peinture par pulvérisation électrostatique du type rotatif tel que revendiqué dans la revendication 1, dans lequel lesdits moyens formant palier de butée du type sans contact comprennent un palier de butée à air.

20. Un dispositif de peinture par pulvérisation électrostatique du type rotatif tel que revendiqué dans la revendication 19, dans lequel lesdits moyens formant palier de butée du type sans contact comprennent, en outre, une pompe (49) d'alimentation en air pour produire de l'air comprimé, ledit palier de butée à air comprenant une plaque annulaire fixe (44) ayant des parois latérales opposées, et une paire d'organes de roulement (39, 40) fixés audit arbre rotatif et montés de part et d'autre de ladite plaque annulaire, chacun desdits organes de roulement étant espacé de la paroi latérale correspondante de ladite plaque annulaire (44), une série d'alésages (51) d'écoulement d'air vers l'extérieur, raccordés à ladite pompe d'alimentation en air, étant formés sur les parois latérales opposées de ladite plaque annulaire.

Fig. 1

# Fig. 2

# Fig. 3

# Fig. 4

Fig. 5

Fig. 6

# Fig. 7

# Fig. 8

## Fig. 9

## Fig. 10

# Fig. 11

# Fig. 12

*Fig. 13*

*Fig. 14*